# NOUVEAU FASCICULE DE BREVET EUROPEEN

(11) **EP 0 549 408 B2**
(45) Date de publication et mention de la décision concernant l'opposition: **19.03.2003**
(45) Mention de la délivrance du brevet: 22.07.1998
(21) Numéro de dépôt: 92403406.9
(22) Date de dépôt: 15.12.1992
(51) Int. Cl.: G06K 19/077

(54) **Double carte à puce**
Doppelte Chipkarte
Double chip card

(30) Priorité: 27.12.1991 FR 9116226
(43) Date de publication de la demande: 30.06.1993
(73) Titulaire: SOCIETE D'APPLICATIONS GENERALES D'ELECTRICITE ET DE MECANIQUE SAGEM, 75783 Paris Cédex 16 (FR)
(72) Inventeur: Ciccone, Jean-Michel, F-95520 Osny (FR); Porato, Marc, F-60240 Chaumont-en-Vexin (FR)
(74) Mandataire: Bloch, Gérard

(56) Documents cités:
- EP-A- 0 052 303
- DE-B- 2 920 012
- FR-A- 2 538 930
- PATENT ABSTRACTS OF JAPAN vol. 10, no. 162 (P-466)(2218) 10 Juin 1986 & JP-A-61 015 289 ( MITSUBISHI ) 23 Janvier 1986
- PATENT ABSTRACTS OF JAPAN vol. 10, no. 327 (P-513)(2383) 7 Novembre 1986 & JP-A-61 133 489 ( MITSUBISHI ) 20 Juin 1986

## Description

La présente invention concerne un support de stockage d'informations, généralement évolutives, du type qu'on utilise pour des transactions pécuniaires, par exemple avec des commercants ou encore une administration comme celle des télécommunications. Comme support de ce genre, on citera les cartes bancaires ou les cartes de téléphone à mémoire dites aussi cartes à puce.

Pour considérer les cartes de téléphone, on les utilise aujourd'hui couramment pour téléphoner d'un appareil public, dit publiphone, et on commence à les utiliser pour téléphoner d'un radiotéléphone portable. La mémoire de ces cartes "contient" à l'origine, par exemple, un crédit déterminé qui est réduit au fur et à mesure de ses utilisations par son détenteur. Quand le crédit est épuisé, il faut en acheter ou en utiliser une autre.

L'appareil, en liaison avec lequel on utilise ces cartes-supports, terminal de paiement ou poste de téléphone, comporte un récepteur de carte comprenant un connecteur agencé pour, par des lames de contact, coopérer avec une plage de connexions, reliée à la mémoire de stockage et imprimée à la surface de la carte, et procéder ainsi à une transaction électronique.

Les cartes actuelles ont des dimensions normalisées.

La miniaturisation de tout ne date pas d'aujourd'hui et les radiotéléphones n'y échappent pas, pour ne considérer que l'application à partir de laquelle est née l'invention de la présente demande mais sans qu'il faille pour autant la limiter à cette application. Cela signifie que, réduisant la taille des appareils, on réduira celle de leur récepteur et donc aussi celle des cartes.

Le document DE-C-3804361 divulgue un support d'informations de type carte à puce, dans lequel une partie enfichable, contenant la mémoire, est amovible. Un évidement est prévu à cet effet, voir préambule de la revendication 1.

La présente invention anticipe sur cette évolution pour proposer un support de stockage d'informations adapté au standard dimensionnel aussi bien actuel que futur.

A cet effet, la présente invention conceme un support d'informations selon la revendication 1.

Sous réserve que les dimensions du support et celles de l'élément de support fonctionnel correspondent respectivement au standard actuel et à celui, futur, de la miniaturisation, d'une part, et que l'élément de support fonctionnel soit convenablement positionné sur le support, d'autre part, le support de l'invention peut être utilisé dans les récepteurs actuels alors que le seul élément de support fonctionnel, ou minisupport, de format réduit, enlevé du support, pourra être utilisé dans les futurs récepteurs.

Le support de l'invention, outre l'avantage de permettre de disposer finalement de deux supports en un, évite d'égarer le petit élément de support fonctionnel, le support lui servant d'étui. C'est un double support (carte) à mémoire (puce).

On notera que l'élément support de DE-A-29 20 012 reste positionné dans un évidement de façon inamovible et que l'unité de traitement de FR-A-2 538 930 n'est pas intégrée à un élément de support fonctionnel et qu'elle ne peut donc pas être utilisée dans des récepteurs de standards différents.

Avantageusement, il est prévu un évidement traversant de réception de l'élément de support fonctionnel qui est obturé d'un côté par un film qui se prolonge, de l'autre côté du support, par un flanc rabattable et percé d'une fenêtre d'accès à la plage de connexions.

De préférence, il est prévu des moyens d'indexage de la position de l'élément de support fonctionnel sur le support.

L'invention sera mieux comprise à l'aide de la description suivante de la forme de réalisation préférée du support de l'invention, en référence au dessin annexé, sur lequel :
- la figure 1 représente une vue de dessus du support de l'invention et
- la figure 2 représente une vue en coupe selon la ligne II-II de la figure 1.

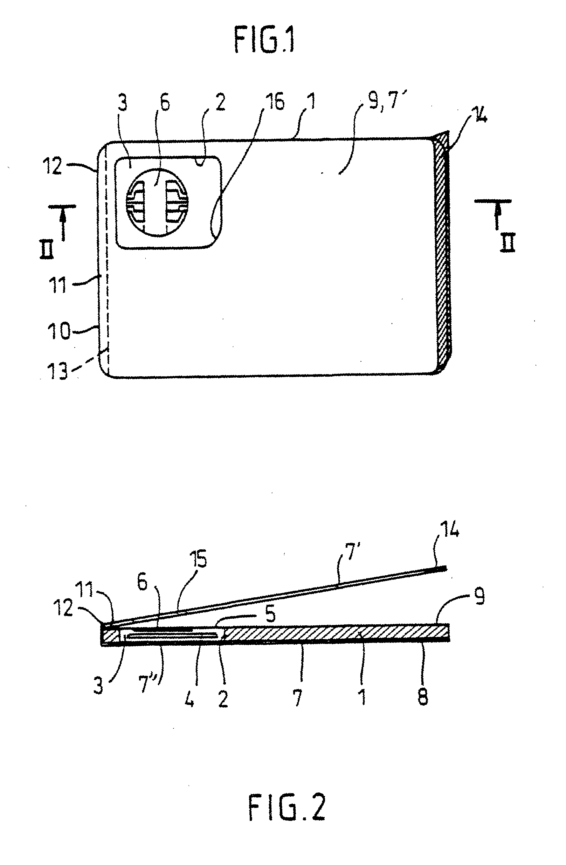

Le dessin représente une carte de téléphone grandeur nature. Elle est constituée d'un support 1 en matière plastique isolante, du polychlorure de vinyle, percé d'un évidement traversant 2 sensiblement rectangulaire vu en plan, sur la figure 1. Dans l'évidement 2 est logé un élément de support, ou minicarte, 3, de forme complémentaire de celle de l'évidement 2 et d'épaisseur pas plus grande que celle de l'évidement, contenant intérieurement une mémoire, ou puce, 4 et sur l'une 5 des faces duquel est imprimée une plage de connexions 6 reliée à la mémoire 4.

Le support 1 est partiellement enveloppé d'un film 7, en matière plastique transparente, de maintien et de fixation de la minicarte 3. Le film 7 est fixé, ici par collage, à la face inférieure 8 du support 1, opposée à celle 9, supérieure, dans le plan de laquelle s'étend la plage de connexions 6, il est rabattu et collé encore contre la tranche transversale 10 du support, proche de l'évidement 2, et il est toujours collé contre une portion transversale d'extrémité 11 de la face supérieure 9, adjacente à son bord transversal 12 et s'étendant entre ce bord 12 et une ligne 13, en tirets sur la figure 1, entre ce bord et l'évidement. Le film 7 se prolonge, au-delà de la ligne 13, par un flanc 7' monté articulé autour de la ligne charnière 13 pour pouvoir être soit rabattu contre la face supérieure 9 du support 1, soit écarté de celle-ci. Ce flanc 7' du film 7 peut être autocollant ou adhérer au support 1 par effet électrostatique.

Le film 7, par sa portion collée contre la face 8 du support et qui obture l'évidement 2, maintient la minicarte 3 et l'empêche de passer à travers le support ; en position rabattue, le flanc 7' du film 7 assure la fixation et le maintien de la minicarte 3 dans le support 1 ; en position écartée du flanc 7' (figure 2), la minicarte 3 peut être enlevée du support 1.

La bande transversale d'extrémité 14 du flanc 7' ne peut pas se plaquer contre le support 1 et forme languette de préhension.

Le flanc 7' est percé d'une fenêtre 15 pour, en position rabattue, laisser découverte la plage de connexions 6 et permettre son accès à des lames de contact d'un connecteur.

L'élément de support de la minicarte 3 est donc plus petit que le support 1 mais suffisamment étendu en surface pour contenir la mémoire 4 et sa plage de connexions 6. En position d'insertion de la minicarte 3 dans le support 1, position déterminée de façon très précise, la plage de connexions 6 reste correctement disposée pour l'utilisation de tout le support 1 dans un récepteur standard actuel.

Pour éviter d'introduire la minicarte 3 dans le support 1 dans une mauvaise position, l'un des quatre coins de l'évidement 2 ainsi que le coin correspondant 16 de la minicarte 3, ici ceux situés sensiblement sur la diagonale du support 1, le plus au centre, sont chanfreinés pour assurer une fonction d'indexage ou de "détrompeur".

En définitive, seule la minicarte 3 de la carte 1 est fonctionnelle et celle-là est fixée à celle-ci de façon amovible. Quand on veut utiliser la carte 1, dans son format global, dans un appareil à récepteur aujourd'hui classique, on laisse la minicarte 3 dans le support 1, avec le flanc 7' du film 7 en position rabattue. Sinon, et pour utiliser la seule minicarte 3 dans un minirécepteur, après avoir écarté le flanc 7' du support 1, on en sort la minicarte 3 par légère pression sur la portion 7" du film 7 disposée sous la minicarte 3.

On dispose ainsi de deux cartes en une seule, à mémoire unique et commune, s'adaptant à deux standards différents, la grande carte évitant aussi de risquer de perdre la petite.

Des moyens de fixation amovible de la minicarte sur la carte autres que le film pourraient être envisagés. Ainsi, la minicarte pourrait être introduite dans l'évidement du support principal très légèrement à force. La minicarte pourrait aussi être glissée latéralement dans un évidement du support principal ouvert sur un côté.

## Revendications

1. Support (1) d'informations stockées dans une mémoire interne (4) reliée à une plage de connexions (6) imprimée sur l'une (5, 9) des faces du support (1), dans lequel la mémoire (4) et sa plage de connexions (6) sont intégrées à un élément de support fonctionnel (3) fixé dans un évidement traversant (2) du support (1) de façon amovible, le support (1) et l'élément de support fonctionnel (3) étant dimensionnés pour correspondre respectivement à un premier standard de récepteur et à un deuxième standard de récepteur miniaturisé, **caractérisé par le fait que** l'évidement traversant (2) est obturé, d'un côté (8), par un film (7) qui se prolonge, de l'autre côté (9) du support (1), par un flanc (7') rabattable et percé d'une fenêtre (15) d'accès à la plage de connexions (6).

2. Support selon la revendication 1, dans lequel il est prévu des moyens (16) d'indexage de la position de l'élément de support fonctionnel (3) sur le support (1).

## Patentansprüche

1. Träger (1) von in einem internen Speicher (4) gespeicherten Informationen, wobei der Speicher mit einem auf einer der Seiten (5, 9) des Trägers (1) aufgedruckten Anschlußbereich (6) verbunden ist, bei welchem der Speicher (4) und sein Anschlußbereich (6) in einem funktionellen Trägerelement (3) integriert sind, welches abnehmbar in einer Durchgangsöffnung (2) des Trägers (1) befestigt ist, wobei der Träger (1) und das funktionelle Trägerelement (3) derart dimensioniert sind, daß sie einem ersten Standard für Aufnahmevorrichtungen bzw. einem miniaturisierten zweiten Standard für Aufnahmevorrichtungen entsprechen, **dadurch gekennzeichnet daß** die Durchgangsöffnung (2) auf einer Seite (8) von einem Film (7) verschlossen ist, der einen verlängerten, auf die andere Seite (9) des Trägers (1) herunterklappbaren äußeren Abschnitt (7') aufweist, der mit einem Zugriff auf den Anschlußbereich (6) ermöglichenden Fenster (15) versehen ist.

2. Träger nach Anspruch 1, bei welchem Mittel (16) zur Anzeige der Position des funktionellen Trägerelements (3) auf dem Träger (1) vorgesehen sind.

## Claims

1. Support (1) for information stored in an internal memory (4) connected to an area of connections (6) which is printed on one (5,9) of the faces of the support (1), wherein the memory (4) and its area of connections (6) are integrated into a functional support element (3) removably attached in a through-cavity (2) of the support (1), the support (1) and the functional support element (3) being dimensioned so as to correspond respectively to a first receiver standard and to a second, miniaturized receiver standard, **characterized in that** the through-cavity (2) is closed off, on one side (8), by a film (7), which is extended on the other side (9) of the support (1), by a foldable flank (7') pierced with a window (15) for access to the area of connections (6).

2. Support according to claim 1, in which means (16) for indexing the position of the functional support element (3) on the support (1) are provided.
